# EUROPÄISCHE PATENTANMELDUNG

(11) **EP 4 696 122 A1**
(43) Veröffentlichungstag der Anmeldung: **18.02.2026**
(21) Anmeldenummer: 25187722.1
(22) Anmeldetag: 07.07.2025
(51) Int. Cl.: A01C 17/00

(54) **VERFAHREN ZUM BESTIMMEN DER SENSORQUALITÄT EINES SENSORS EINER LANDWIRTSCHAFTLICHEN VERTEILMASCHINE, VERTEILMASCHINE MIT EINEM SOLCHEN SENSOR UND COMPUTERPROGRAMM**

(30) Priorität: 13.08.2024 DE 102024123138
(71) Anmelder: RAUCH Landmaschinenfabrik GmbH, 77836 Rheinmünster (DE)
(72) Erfinder: Stöcklin, Volker, 77975 Ringsheim (DE); Hartinger, Markus, 67100 Strasbourg (FR); Martinez, Israel, 76189 Karlsruhe (DE)
(74) Vertreter: Lichti - Patentanwälte Partnerschaft mbB

(57) **Zusammenfassung**

Es wird ein Verfahren zum Bestimmen der Sensorqualität von mindestens einem Sensor (10) einer landwirtschaftlichen Verteilmaschine (1) vorgeschlagen. Der Sensor ist derart angeordnet und ausgestaltet, um Messwerte (27) eines von der Verteilmaschine abgeworfenen Verteilgutes (22) zu erfassen und die Messwerte als Sensorsignale (28) an eine dem Sensor zugeordnete Datenverarbeitungseinrichtung (23) zu übertragen. Die Datenverarbeitungseinrichtung wendet ein trainiertes Modell auf die Sensorsignale an unter Erhalt eines Güteparameters, der der Sensorqualität des Sensors entspricht.

## Beschreibung

Die Erfindung betrifft ein Verfahren zum Bestimmen der Sensorqualität von mindestens einem Sensor einer landwirtschaftlichen Verteilmaschine, wobei der Sensor derart angeordnet und ausgestaltet ist, Messwerte eines von der Verteilmaschine mittels mindestens einer Verteilerscheibe abgeworfenen Verteilgutes zu erfassen und die Messwerte als Sensorsignale an eine dem Sensor zugeordnete Datenverarbeitungseinrichtung zu übertragen. Die Erfindung bezieht sich ferner auf eine zur Durchführung eines solchen Verfahrens geeignete landwirtschaftliche Verteilmaschine mit mindestens einer Verteilerscheibe zum Abwerfen von Verteilgut und mit mindestens einem der Verteilerscheibe zugeordneten Sensor, sowie auf ein Computerprogramm mit Programmcodemitteln.

Aus der DE 10 2015 011 496 A1 ist es bekannt, Sensoren bei landwirtschaftlichen Verteilmaschinen einzusetzen, die von mindestens einer Verteilerscheibe der Verteilmaschine abgeworfenes Verteilgut erfassen und einen oder mehrere Parameter des Verteilguts bestimmen. Zum Schutz vor Beschädigungen infolge von äußeren Einwirkungen sind die Sensoren in einzelnen Gehäusemodulen untergebracht.

Es hat sich herausgestellt, dass die Ansammlung von Staub und Schmutz auf dem Sensor dessen Empfindlichkeit und Messgenauigkeit reduziert. Schmutz verteilt sich jedoch nicht gleichmäßig über den gesamten Sensor und auch nicht über jeden Sensor gleichmäßig. Aufgrund der dadurch entstehenden unregelmäßigen Schmutzschichten auf den Sensoren ist es unmöglich pauschal vorherzusagen, wann und wie oft ein Sensor gereinigt werden sollte. Darüber hinaus unterliegt der Sensor technischen Abnutzungserscheinungen, wie Kurzschlüssen, Kabelbrüchen, Wackelkontakten oder dergleichen.

In der Praxis existieren bei landwirtschaftlichen Verteilmaschinen Ausgestaltungen, die vorsehen, dass mit einer Fallabfrage ermittelt wird, ob ein bestimmtes Sensorsignal eines Sensors von einem vorgegebenen Wert um ein vorgegebenes Intervall abweicht. Ist dies der Fall, werden Einstellparameter der Verteilmaschine, wie im Falle eines Scheibendüngerstreuers beispielsweise die Drehzahl der (jeweiligen) Verteilerscheibe, der Aufgabepunkt des Verteilgutes auf die (jeweilige) Verteilerscheibe und/oder die mittels eines (jeweiligen) Dosierorgans dosierte Dosiermenge, so lange nachjustiert, bis das Sensorsignal wieder innerhalb des vorgegebenen Intervalls um den vorgegebenen Wert ist (vgl. **z.B.** die EP 2 777 376 A2). Dies dient zur Korrektur von Fehlern bei der Ausbringung des Verteilgutes, führt jedoch in der Praxis bei einem technisch defekten und/oder mehr oder minder stark verschmutzten Sensor gerade erst zu einer ungewollten Veränderung des eigentlich korrekten Streubildes zu einem falschen Streubild. Insoweit oblag es bislang dem Benutzer der Verteilmaschine, den Sensor manuell und in Unkenntnis der tatsächlichen Verschmutzung des Sensors hinsichtlich seiner Sensorqualität in regelmäßigen, festgelegten Intervallen überprüfen und erforderlichenfalls zu reinigen oder auszutauschen.

Die DE 10 2019 107 123 B1 beschreibt ein Verfahren zum Ermitteln des Verschmutzungszustandes von zur Ermittlung des Flugverhaltens von abgeworfenem Verteilgut vorgesehenen Sensoren einer landwirtschaftlichen Verteilmaschine sowie eine zur Durchführung eines solchen Verfahrens eingerichtete landwirtschaftliche Verteilmaschine. Das bekannte Verfahren sieht eine Aufzeichnung von das Flugverhalten des abgeworfenem Verteilgutes betreffenden Messwerten durch mehrere Sensoren der Verteilmaschine, eine Ermitteln eines Sollwertebereichs für jeden der Sensoren während eines Kalibriervorgangs durch eine Auswerteeinrichtung beim Ausbringen des Verteilgutes auf eine landwirtschaftliche Nutzfläche sowie eine Überwachung der durch die mehreren Sensoren aufgezeichneten Messwerte hinsichtlich des Verlassens des für den jeweiligen Sensor ermittelten Sollwertebereichs zum Identifizieren einer Sensorverschmutzung durch die Auswerteeinrichtung vor. Als problematisch hat sich in der Praxis herausgestellt, dass eine solche statische Überwachung von Sollwertbereichen der Sensoren oft nicht zur zuverlässigen Erkennung von verschiedenartigen Defekten und/oder Verschmutzungen der Sensoren der landwirtschaftlichen Verteilmaschine, wie **z.B.** auch nur bereichsweise an den Sensoren anhaftender Feuchtigkeit, Staub, Verteilgutpartikel unterschiedlichen Typs etc., in der Lage ist, so dass im Falle einer zu späten Erkennung die Gefahr von Streufehlern besteht, wohingegen im Falle der Falscherkennung vermeintlicher Defekte und/oder Verschmutzungen der Sensoren dem Benutzer der Verteilmaschine ein unnötiger (Zeit)aufwand entsteht.

Der Erfindung liegt die Aufgabe zugrunde, ein Verfahren zum Bestimmen der Sensorqualität von mindestens einem Sensor einer landwirtschaftlichen Verteilmaschine der eingangs genannten Art auf einfache und kostengünstige Weise dahingehend weiterzubilden, dass eine zuverlässigere Bestimmung der Sensorqualität des Sensors auch unter verschiedenen Einsatzbedingungen der Verteilmaschine möglich ist. Sie ist ferner auf eine zur Durchführung eines solchen Verfahrens geeignete landwirtschaftliche Verteilmaschine der eingangs genannten Art sowie auf ein Computerprogramm zur Implementierung eines solchen Verfahrens gerichtet.

In verfahrenstechnischer Hinsicht wird diese Aufgabe erfindungsgemäß bei einem Verfahren der eingangs genannten Art dadurch gelöst, dass die Datenverarbeitungseinrichtung ein trainiertes Modell auf die Sensorsignale anwendet unter Erhalt eines Güteparameters, welcher der Sensorqualität des Sensors entspricht.

In vorrichtungstechnischer Hinsicht sieht die Erfindung zur Lösung dieser Aufgabe bei einer landwirtschaftlichen Verteilmaschine mit mindestens einer Verteilerscheibe zum Abwerfen von Verteilgut und mit mindestens einem der Verteilerscheibe zugeordneten Sensor ferner vor, dass die Verteilmaschine zur Durchführung eines solchen Verfahrens ausgebildet ist.

Überdies wird diese Aufgabe erfindungsgemäß durch ein Computerprogramm mit Programmcodemitteln gelöst, das dazu eingerichtet ist, die Schritte eines Verfahrens der vorgenannten Art durchzuführen, wenn das Computerprogramm auf einem Computer oder einer entsprechenden Recheneinheit ausgeführt wird, insbesondere auf einer Datenverarbeitungseinrichtung einer landwirtschaftlichen Verteilmaschine der vorgenannten Art.

Die Erfindung basiert auf dem Grundgedanken, dass es die Anwendung eines trainierten Modells erlaubt, komplexe Parameterfelder der von den Sensoren erfassten Messwerten bzw. der von den Sensoren erzeugten Sensorsignale hinsichtlich der aktuellen Sensorqualität auszuwerten. Beispielsweise können damit augenscheinlich nur schwer erfassbare Muster in den Messwerten bzw. Sensorsignalen erkannt werden, um insbesondere eine Beeinträchtigung der Sensorqualität zuverlässig zu identifizieren. Damit wird ermöglicht, den Benutzer rechtzeitig auf eine sich abzeichnende Beeinträchtigung des Sensors aufmerksam zu machen, um gegebenenfalls die Beeinträchtigung zu beseitigen oder den Sensor auszutauschen bzw. zu reparieren, insbesondere bevor die Beeinträchtigung des Sensors dem Benutzer bereits auffällt. Entsprechendes gilt für eine Verschmutzung des Sensors, nach deren vorzugsweise frühzeitigen Erkennung der Sensor gereinigt werden kann. Durch die Flexibilität des Verfahrens aufgrund der Anwendung des trainierten Modells kann das Verfahren auf eine Vielzahl von verschiedenen Umgebungen optimiert werden, die bei der Herstellung der landwirtschaftlichen Verteilmaschine noch nicht berücksichtigt werden müssen. Zusätzlich kann das Verfahren bei einer Änderung der Einsatzumgebung auf die neue Einsatzumgebung optimiert werden, wobei die Überwachung der Sensoren je nach Training und/oder Verlauf des Anwendungsverfahrens dynamisch vonstattengehen kann, indem unterschiedliche Parameter unterschiedlich gewichtet werden können.

Die Messwerte können vorzugsweise elektromagnetische Signale sein, die von einer dem Sensor zugeordneten elektromagnetischen Signalquelle erzeugt werden und insbesondere auf das abgeworfene Verteilgut ausgerichtet sind. Die Messwerte können hierbei an dem Verteilgut gestreute und/oder reflektierte Signale sein, die insbesondere von der Datenverarbeitungseinrichtung hinsichtlich mindestens eines der folgenden Parameter des Verteilguts ausgewertet werden können: Partikelgröße, Partikelort, Partikelgeschwindigkeit, Partikelrichtung, Partikelbeschleunigung, etc.

In diesem Zusammenhang kann beispielsweise vorgesehen sein, dass die Messwerte Laser- und/oder Lidar- und/oder Radar- und/oder Infrarot- und/oder akustische Signale sind. Das trainierte Modell kann als KI-Modell mindestens eine KI-basierte Komponente umfassen und/oder als neuronales Netz und/oder als ein maschinelles Lernen-Modell ausgebildet sein.

Vorzugsweise wendet die Datenverarbeitungseinrichtung das trainierte Modell auf Sensorsignale von mindestens zwei Sensoren und/oder auf eine innerhalb eines, insbesondere vordefinierten, Zeitintervalls erfasste Gruppe von Sensorsignalen an. Die Anwendung des trainierten Modells auf Sensorsignale von mindestens zwei oder mehr Sensoren ermöglicht die Bestimmung der Sensorqualität insbesondere anhand von durch die Anwendung des trainierten Modells erkannten Mustern, die in der Gesamtheit der Sensorsignale der mindestens zwei Sensoren vorhanden, jedoch insbesondere augenscheinlich allenfalls schwer detektierbar sind. Im Falle der Anwendung des trainierten Modells auf eine innerhalb eines Zeitintervalls erfasste Gruppe von Sensorsignalen können aus dem zeitlichen Verlauf der Sensorsignale Rückschlüsse auf eine eventuelle Beeinträchtigung der Sensorqualität geschlossen werden. Besonders vorteilhaft ist eine Kombination der beiden vorgenannten Möglichkeiten, wenn also das trainierte Modell sowohl auf Sensorsignale von mindestens zwei Sensoren als auch auf eine innerhalb eines Zeitintervalls erfasste Gruppen von Sensorsignalen, insbesondere von Sensorsignalen der mindestens zwei Sensoren, angewendet wird, um die Genauigkeit des Verfahrens zu verbessern.

Das trainierte Modell wird vorzugsweise nach einer, insbesondere veränderlichen, Gewichtung der Sensorsignale auf die Sensorsignale angewendet, wobei die Gewichtung insbesondere in Abhängigkeit eines Zeitintervalls und/oder in Abhängigkeit von dem den Sensorsignalen zugeordneten Sensoren erfolgt. Die Gewichtung ist insbesondere im mathematischen Sinne zu verstehen und kann vorsehen, dass beispielsweise jedem Sensorsignal ein bestimmter Faktor zugeordnet ist, der dessen Bedeutung bei der Bestimmung des Güteparameters entspricht. Dadurch ist es möglich, dass das Verfahren bestimmte Sensorsignale von bestimmten Sensoren gegenüber anderen Sensorsignalen von anderen Sensoren bevorzugt berücksichtigt. Hierfür kann insbesondere die räumliche Anordnung der Sensoren maßgeblich sein. Beispielsweise kann es sein, dass die Verschmutzung eines Sensors zunimmt, je weiter der Sensor von der Mittelachse der Verteilmaschine entfernt liegt oder auch umgekehrt. Die Art der Gewichtung kann veränderlich, insbesondere im Verlauf des Verfahrens selbst veränderlich sein, so dass das Verfahren in diesem Sinne auch eine dynamische Gewichtung umfasst. Die Gewichtung kann abhängig sein von einem Zeitintervall, um beispielsweise die Gewichtung tageszeitabhängig zu gestalten. Alternativ oder zusätzlich kann die Gewichtung abhängig von den den Sensorsignalen zugeordneten Sensoren sein, um Messwerte von bestimmten Sensoren, die sich für die Bestimmung der Sensorqualität als maßgeblich herausgestellt haben, verstärkt zu berücksichtigen.

Vorzugsweise wird das trainierte Modell für den Erhalt des Güteparameters auf mindestens ein Mitglied der folgenden Parameter angewendet: Luftfeuchtigkeit, Windrichtung, Windstärke, Position der Verteilmaschine, Fahrgeschwindigkeit der Verteilmaschine, Neigung und/oder Beschleunigung der Verteilmaschine, Verteilgutparameter einschließlich Verteilguttyp, Dosiermenge, Drehzahl der Verteilerscheibe, Arbeitsbreite, Aufgabepunkt auf die Verteilerscheibe, Wurfweite, Verteilerscheibentyp. Zur Bestimmung der genannten Parameter kann die Verteilmaschine einen dem jeweiligen Parameter zugeordneten Sensor aufweisen, der zur Bestimmung des Parameters für die Erfassung und Auswertung der dem Parameter entsprechenden Messsignale ausgebildet ist. Dieser Sensor kann beispielsweise ein Feuchtigkeitssensor, ein Windsensor, ein Positionserfassungssensor, wie z.B. ein GPS-Sensor, ein Geschwindigkeitssensor, ein Beschleunigungssensor, ein Neigungssensor, ein Verteilerscheibensensor (vgl. hierzu z.B. die EP 2 055 168 A1), etc. sein. Der Parameter des Verteilgut- bzw. Düngertyps kann beispielsweise mittels einer manuellen oder automatisierten Eingabe eingelesen werden.

Der Güteparameter entspricht vorzugsweise der Verschmutzung des Sensors, insbesondere dessen Verschmutzungsgrad, und/oder dem technischen Zustand des Sensors. Im Sinne der Erfindung kann ein Sensor beispielsweise dann verschmutzt sein, wenn Luftfeuchtigkeit in oder an dem Sensor derart kondensiert, dass die dadurch entstehende Wasserschicht die von dem Sensor empfangenen Messwerte beeinträchtigt. Eine weitere Möglichkeit der Verschmutzung kann durch Schmutzablagerungen an oder in dem Sensor gegeben sein. Der technische Zustand des Sensors im Sinne der Erfindung kann technische Defekte, wie einen generellen Ausfall der Arbeitsweise des Sensors, berücksichtigen sowie im Speziellen einen Kabelbruch, eine kalte Lötstelle oder einen Wackelkontakt. Insbesondere dann, wenn das trainierte Modell auf die Sensorsignale von mindestens zwei Sensoren angewendet wird, kann der Güteparameter der Sensorqualität von mehreren Sensoren entsprechen.

Vorzugsweise repräsentiert der Güteparameter eine Metrik, die dem Abstand der aktuellen Sensorqualität von einem, insbesondere vordefinierten, Grenzwert einer idealen Sensorqualität entspricht. Der vordefinierte Grenzwert einer idealen Sensorqualität kann bei der ersten Inbetriebnahme der Verteilmaschine und/oder nach einer Reinigung der Sensoren durch die Datenverarbeitungseinrichtung erfasst und dort abgespeichert werden. Der Güteparameter kann ein numerischer Wert sein, insbesondere ein Gleitkommawert. In einer Weiterbildung der Erfindung kann der Güteparameter ein Ganzzahlwert, ein Prozentualwert, ein Boolescher Wert, ein Zeichen und/oder eine Zeichenkette sein. Beispielwerte für einen Booleschen Wert sind 0 ("verschmutzt") und 1 ("nicht verschmutzt"). Das Zeichen kann eine Abkürzung für den Verschmutzungsgrad sein wie etwa v ("verschmutzt") und s ("sauber"). Entsprechendes kann für die Zeichenkette gelten, die beispielsweise die Werte "verschmutzt" und "nicht verschmutzt" aufweist. Weiterbildungen der Erfindung können ferner vorsehen, dass der Güteparameter ein Farbcode ist, wobei beispielsweise grün auf einen sauberen Sensor und rot auf einen verschmutzen und/oder beschädigten Sensor hinweisen kann. Durch einen Farbgradienten zwischen diesen beiden Zuständen sind auch Zwischenzustände erfassbar. Die Metrik kann eine einfache, insbesondere betragsmäßige, Differenz zwischen der aktuellen Sensorqualität, die dem erhaltenen Güteparameter entspricht, und dem vordefinierten Grenzwert, die der idealen Sensorqualität entspricht, sein. Insbesondere dann, wenn der Güteparameter mehrere Werte aufweisen kann, kann die Metrik einem Effektivwert oder einem quadratischen Mittelwert entsprechen, der auch als RMS-Wert ("root mean square") bezeichnet wird.

Der Güteparameter kann vorzugsweise einer vordefinierten Anzahl von Kategorien zugeordnet werden, wobei die Kategorie des Güteparameters insbesondere auf einer Ausgabeeinrichtung ausgegeben wird, wie beispielsweise auf einer Anzeigeeinrichtung angezeigt wird. Die Zuordnung des Güteparameters zu einer Anzahl von Kategorien kann z.B. im Sinne eines Histogramms erfolgen, wobei der Wert des Güteparameters die zuzuordnende Kategorie bestimmen kann. Beispiele für Kategorien sind etwa "sehr sauber", "ziemlich sauber", "schmutzig" und "zu schmutzig". Durch die Ausgabe der Kategorie des Güteparameters kann der Benutzer der Verteilmaschine die jeweils aktuelle Sensorqualität schnell und einfach nachvollziehen. Besonders einfach kann dies über die Anzeige auf einer Anzeigeeinrichtung erfolgen. Die Anzeigeeinrichtung kann **z.B.** ein Bildschirm eines Bedienmoduls der Verteilmaschine oder ein Bildschirm in der Fahrerkabine eines die Verteilmaschine tragenden oder ziehenden Traktors sein.

In vorteilhafter Ausgestaltung wird ein Signal ausgegeben, wenn der Güteparameter um ein vordefiniertes Warnintervall von einem vordefinierten Warnwert abweicht, um den Benutzer auf eine Verschmutzung des Sensors hinzuweisen. Insoweit kann das Signal an den Benutzer ausgegeben werden, beispielsweise als visuelles und/oder akustische Signal. Das Signal ist beispielsweise ein dem Güteparameter zugeordnetes Farbsignal, wobei z.B. "grün" auf einen sauberen und/oder funktionierenden Sensor und "rot" auf einen verschmutzten und/oder defekten Sensor hinweisen kann. Das Signal kann auch als Warnhinweis an den Benutzer durch die Betriebssoftware der Verteilmaschine ausgegeben werden. Vorteilhafterweise kann das Signal an ein mobiles Kommunikationsgerät des Benutzers und/oder über ein Terminal der Verteilmaschine übertragen und dort ausgegeben werden. Das Signal kann an eine mit der Datenverarbeitungseinrichtung verbundene Datenempfangseinrichtung übertragen werden, wobei die Übertragung insbesondere drahtlos erfolgen kann. Zur Übertragung des Signals kann die Verteilmaschine eine Antenne aufweisen. Die Datenempfangseinrichtung kann zu Telemetriezwecken ein Hersteller-Server sein. Der Güteparameter, insbesondere auch die dem trainierten Modell zugeführten Eingangsgrößen, können über eine Datensendeeinrichtung an einen Server übertragen werden zur Protokollierung, zum Auslesen und zur Überprüfung des Verfahrens.

Das Warnintervall und/oder der Warnwert können benutzerdefiniert sein. Das Warnintervall und/oder der Warnwert können ferner dynamisch, also während des Verfahrens, veränderbar sein. Der Warnwert, der mit dem erhaltenen Güteparameter verglichen wird, kann der Sensorqualität bei einem intakten Sensor, insbesondere bei einem sauberen und/oder funktionierenden Sensor, entsprechen.

Gemäß einer vorteilhaften Weiterbildung kann vorgesehen sein, dass eine Reinigungsvorgang der Verteilmaschine angesteuert wird, sobald der Güteparameter um ein vordefiniertes Reinigungsintervall von einem vordefinierten Reinigungswert abweicht, um bei einer Verschmutzung des Sensors möglichst schnell dessen Reinigung zu veranlassen. In einer Ausführungsform der Erfindung kann der Reinigungswert dem Warnwert entsprechen. Das Reinigungsintervall kann z.B. größer als das Warnintervall sein, um bereits dann den Reinigungsvorgang veranlassen zu können, bevor der Sensor erheblich verschmutzt ist.

Vorzugsweise kann nach dem Erhalt des Güteparameters ein Fehlerparameter bestimmt werden, welcher der Erkennungsgenauigkeit des erhaltenen Güteparameters entspricht, um ein Maß für die Genauigkeit des im Rahmen des erfindungsgemäßen Verfahrens erhaltenen Güteparameters zu bestimmen. Dies dient auch einem Lernen des trainierten Modells. Zur Bestimmung des Fehlerparameters kann eine Eingabe, insbesondere eine Benutzereingabe, über eine Bedieneinrichtung der Verteilmaschine erfolgen. Die Bedieneinrichtung kann eine Schnittstelle der Verteilmaschine, wie beispielsweise ein ISOBUS-Terminal, oder eine Verbindungseinrichtung des Benutzers, wie beispielsweise ein mobiles Endgerät, sein. Der Fehlerparameter kann beispielsweise im Rahmen eines benutzerseitigen Vergleichs des erhaltenen Güteparameters mit einem Idealwert hierfür bestimmbar sein.

Vorzugsweise wird nach der Bestimmung des Fehlerparameters der Fehlerparameter mit einem vordefinierten Grenzwert verglichen und wird für den Fall, dass der Fehlerparameter um weniger als ein, insbesondere vordefiniertes, Fehlerintervall von dem Grenzwert abweicht, das Verfahren fortgesetzt, während für den Fall, dass der Fehlerparameter um mehr als das Fehlerintervall von dem Grenzwert abweicht, das Verfahren in einen Lernmodus umgeschaltet wird, der zweckmäßigerweise die folgenden Schritte umfasst:
- Einlesen des Güteparameters des Sensors,
- Ändern von Parametern des trainierten Modells durch Rückwärtsspeisen des trainierten Modells mit einem Differenzparameter, der basierend auf dem erhaltenen Güteparameter und dem eingelesenen Güteparameters bestimmt wird, und
- Wiederholen des Verfahrens.

Der eingelesene Güteparameter des Sensors kann dem Idealwert oder auch Sollwert eines ideal funktionierenden Sensors entsprechen. Das Fehlerintervall kann größer sein als das vordefinierte Intervall, insbesondere das Warnintervall. Der Differenzparameter kann aus einer Differenz zwischen dem erhaltenen Güteparameter und dem eingelesenen Güteparameter bestimmt werden. Durch das Rückwärtsspeisen kann das trainierte Modell während des Betriebs mittels des Lernmodus' durch den Benutzer auf den aktuellen Einsatzzweck optimiert werden, insbesondere hinsichtlich aktuell vorherrschender Gegebenheiten wie Luftfeuchtigkeit oder Verschmutzung des Einsatzfeldes, auf dem die Verteilmaschine betrieben wird. Durch die Optimierbarkeit des trainierten Modells während des Verfahrens wird eine deutlich genauere und zuverlässigere Bestimmung der Sensorqualität ermöglicht als dies rein herstellerseitig erfolgen kann. Die Bestimmung der Sensorqualität ist damit anpassbar auf die individuell vorherrschenden (Boden- und Umgebungs)bedingungen, wie beispielsweise Sand- oder Tonböden, wie auch auf sonstige Rahmenbedingungen, wie lokale Luftfeuchtigkeit und hinsichtlich des jeweils eingesetzten Verteilguttyps, insbesondere des jeweils eingesetzten Düngertyps.

Nach der Bestimmung des Fehlerparameters kann für den Fall, dass der Fehlerparameter um weniger als ein vordefiniertes Reparaturintervall von einem vorbestimmten Fehlerparameter abweicht, ein Signal ausgegeben werden, das einer erfolgreichen Reparatur und/oder Reinigung des Sensors entsprechen kann.

Vorzugsweise ist das trainierte Modell in einem Trainingsmodus mit Soll-Trainingsdaten trainierbar, wobei die Soll-Trainingsdaten Sensorsignale des Sensors und mit den Sensorsignalen korrespondierende, vordefinierte Güteparameter des Sensors umfassen, mit den folgenden Trainingsschritten:
- Vorwärtsspeisen des trainierten Modells mit den Soll-Trainingsdaten unter Erhalt eines Güteparameters,
- Bestimmen eines Fehlerparameters, welcher der Abweichung zwischen dem ermittelten Güteparameter und dem vordefinierten Güteparameter entspricht, und
- Ändern von Parametern des trainierten Modells durch Rückwärtsspeisen des Modells mit dem Fehlerparameter, falls ein dem Fehlerparameter zugeordneter Qualitätsparameter um mehr als ein vordefiniertes Trainingsintervall von einem vordefinierten Wert abweicht.

Der Trainingsmodus basiert auf der Grundüberlegung, dass der den Soll-Trainingsdaten zugeordnete ideale Wert für den erhaltenen Güteparameter bereits bekannt und durch die Abweichung des ermittelten Güteparameters hiervon das trainierte Modell durch Rückwärtsspeisen optimierbar ist. Der Fehlerparameter kann insofern aus einer Differenz zwischen dem ermittelten Güteparameter und dem vordefinierten Güteparameter bestimmt werden. Der Qualitätsparameter kann dem Maß eines Abstandes zwischen dem Fehlerparameter und dem vordefinierten Wert entsprechen. Das trainierte Modell kann in dem Trainingsmodus mit den Soll-Trainingsdaten trainiert sein.

Das Verfahren kann nach dessen Abschluss nach einem, insbesondere vordefinierten und/oder veränderlichen, Zeitintervall wiederholt werden. Auf diese Weise wird sichergestellt, dass eine Verschmutzung und/oder Beschädigung des Sensors möglichst frühzeitig erkannt wird. Das Zeitintervall für die Wiederholung des Verfahrens kann in Abhängigkeit von dem zuletzt erhaltenen Güteparameter verändert werden.

In Bezug auf eine erfindungsgemäße Verteilmaschine kann in vorteilhafter Ausgestaltung vorgesehen sein, dass der Sensor unterhalb der Verteilerscheibe der Verteilmaschine und/oder insbesondere in Abhängigkeit von der Höhe der Verteilerscheibe höhenverstellbar angeordnet ist. Die Detektionsrichtung des Sensors, in der die Messwerte durch den Sensor detektierbar sind, kann nach oben oder nach schräg oben und/oder radial nach außen relativ zu der Verteilerscheibe ausgerichtet sein.

Die Verteilmaschine umfasst vorteilhafterweise mindestens 12, vorzugsweise mindestens 18, höchst vorzugsweise mindestens 24, Sensoren, die insbesondere in Umfangsrichtung relativ zu dem radialen Mittelpunkt der Verteilerscheibe verteilt angeordnet sind. Für den vorteilhaften Fall, dass die Verteilmaschine zwei Verteilerscheiben aufweist, die gegenläufig zueinander antreibbar sein können, kann jeder Verteilerscheibe eine Anordnung von Sensoren, vorzugsweise in der vorgenannten Anzahl, zugeordnet sein, wobei die Anordnung von Sensoren relativ zu der ihr zugeordneten Verteilerscheibe in Umfangsrichtung verteilt angeordnet ist. Alternativ können bei mehreren Verteilerscheiben sämtliche Sensoren lediglich einer einzigen Verteilerscheibe zugeordnet sein. Zwischen zwei zueinander benachbarten Sensoren kann der Winkelabstand relativ zu der Verteilerscheibe zwischen etwa 4° und etwa 10°, wie beispielsweise etwa 7°, betragen. Die Gesamtheit der Sensoren kann beispielsweise einen Winkelbereich zwischen etwa 160° und etwa 270° relativ zu der Verteilerscheibe umfassen, wie beispielsweise einen Winkelbereich von etwa 190°.

Mehrere Sensoren können vorzugsweise zu einer Sensoreinheit zusammengefasst und insbesondere auf einer gemeinsamen Platine der Sensoreinheit angeordnet sein. Die Platine kann insbesondere drei Sensoren aufweisen und/oder die Sensoren können lösbar mit der Platine verbunden sein. Durch die Zusammenfassung von mehreren Sensoren innerhalb einer Sensoreinheit wird die Fehleranfälligkeit der Sensoren reduziert. Um die Detektion der Messwerte durch die Sensoren nicht zu beeinträchtigen, kann die Sensoreinheit z.B. ein für die Messwerte durchlässiges Deckelteil aufweisen, das insbesondere aus einem Kunststoff gefertigt ist. An ihrer der Verteilerscheibe zugewandten Seite kann die Sensoreinheit eine Blende zum Schutz der Sensoren der Sensoreinheit vor Verteilgut und/oder vor Schmutz und/oder vor Feuchtigkeit aufweisen.

Der Sensor, insbesondere sämtliche Sensoren, der Verteilmaschine können an einem mit der Verteilmaschine verbundenen Träger angeordnet sein. Der Träger kann über einen Tragarm mit einem Rahmen der Verteilmaschine befestigt und/oder höhenverstellbar sein. Durch den Träger ist eine möglichst konstante Relativposition der Sensoren zu der Verteilerscheibe der Verteilmaschine gewährleistet. Die Höhenverstellbarkeit des Trägers erlaubt eine Optimierung der Sensorposition hinsichtlich der von dem Sensor erfassten Messwerte.

Der Sensor kann vorzugsweise zur Detektion von Messwerten in Form von elektromagnetischer Strahlung ausgebildet sein. Die elektromagnetische Strahlung kann Infrarot-, Radar-, Laser- oder Lichtstrahlung sein. In letzterem Fall kann der Sensor als Kamera ausgebildet sein, wobei die von der Kamera erfassten Messwerte Bilddaten des Verteilguts sein können, die vorzugsweise im Rahmen des erfindungsgemäßen Verfahrens ausgewertet werden. Die Messwerte können ferner akustische Signale, insbesondere Ultraschallsignale sein. In einer Ausführungsform der Erfindung kann der Sensor einen Oberflächenfeuchtigkeitssensor umfassen, um die Luftfeuchtigkeit zu messen. Die Ausrichtung des mindestens einen Sensors kann üblicherweise zu dem von der Verteilmaschine abgeworfenen Verteilgut ausgerichtet sein und hierzu insbesondere in einer Richtung nach oben und/oder relativ zu der Verteilerscheibe radial nach außen weisen. Dem Sensor kann eine Signalquelle derart zugeordnet sein, dass die Signale der Signalquelle auf das abgeworfene Verteilgut ausgerichtet sind und die an den Verteilgutpartikeln reflektierten Signals danach von dem Sensor erfassbar sind. In einer Weiterbildung der Erfindung können bei mehreren Sensoren jedem Sensor eine eigene Signalquelle oder jedem Sensor eine einzige Signalquelle zugeordnet sein.

Die Verteilmaschine kann ferner vorteilhafterweise eine Bedieneinrichtung zur Entgegennahme von mindestens einer Benutzereingabe zur Steuerung des Verfahrens aufweisen, wobei die Bedieneinrichtung zur Kommunikation mit der Datenverarbeitungseinrichtung über eine Schnittstelle der Verteilmaschine ausgebildet ist. Die Kommunikation kann drahtgebunden oder drahtlos erfolgen. Über die Benutzereingabe können Parameter des Verfahrens dynamisch, also während der Laufzeit des Verfahrens, und/oder benutzerdefiniert veränderbar und/oder das Verfahren steuerbar sein.

Bei dem Verteilgut kann es sich in als solcher bekannter Weise insbesondere um Dünger und/oder Saatgut handeln.

Die landwirtschaftliche Verteilmaschine kann insbesondere von einem Scheibenstreuer bzw. Zentrifugalstreuer, wie beispielsweise einem Zweischeiben-Düngerstreuer, gebildet sein. Eine solche Verteilmaschine kann in als solcher bekannter Weise eine einer jeweiligen Verteilerscheibe zugeordnete Dosiereinrichtung, um die Dosierung des Massenstroms an Verteilgut auf die Verteilerscheibe zu steuern und/oder zu regeln, eine Einrichtung zur Veränderung der Drehzahl einer jeweiligen Verteilerscheine sowie eine Einrichtung zur Verstellung des Aufgabepunktes an Verteilgut auf eine jeweilige Verteilerscheibe aufweisen, um das Streubild steuern und/oder regeln zu können.

Das erfindungsgemäße Computerprogramm ist zweckmäßigerweise mit Programmcodemitteln dazu eingerichtet, die Schritte des erfindungsgemäßen Verfahrens durchzuführen, wenn das Computerprogramm auf der Datenverarbeitungseinrichtung einer erfindungsgemäßen Verteilmaschine ausgeführt wird.

Weitere Merkmale und Vorteile der Erfindung ergeben sich aus der nachfolgenden Beschreibung, in der Ausführungsbeispiele der Erfindung unter Bezugnahme auf die Zeichnung im Einzelnen näher erläutert sind. Dabei zeigen:
- Fig. 1: eine Ausführungsform einer erfindungsgemäßen landwirtschaftlichen Verteilmaschine in einer perspektivischen Ansicht von schräg hinten;
- Fig. 2: eine Detailansicht eines Träger der Verteilmaschine gemäß Fig. 1 mit mehreren Sensoreinheiten;
- Fig. 3: eine weitere Detailansicht eines Träger gemäß Fig. 2;
- Fig. 4: eine Detailansicht einer Sensoreinheit gemäß Fig. 2;
- Fig. 5: eine Explosionsdarstellung der Sensoreinheit gemäß Fig. 4;
- Fig. 6: eine schematische Schnittansicht durch die Sensoreinheit gemäß Fig. 4 und 5;
- Fig. 7: eine schematische Funktionsansicht einer Ausführungsform einer erfindungsgemäßen Verteilmaschine;
- Fig. 8: ein Ablaufdiagramm einer Ausführungsform eines erfindungsgemäßen Verfahrens zum Bestimmen der Sensorqualität;
- Fig. 9: ein Ablaufdiagramm eines Lernmodus' eines erfindungsgemäßen Verfahrens; und
- Fig. 10: ein Ablaufdiagramm eines Trainingsmodus' eines erfindungsgemäßen Verfahrens.

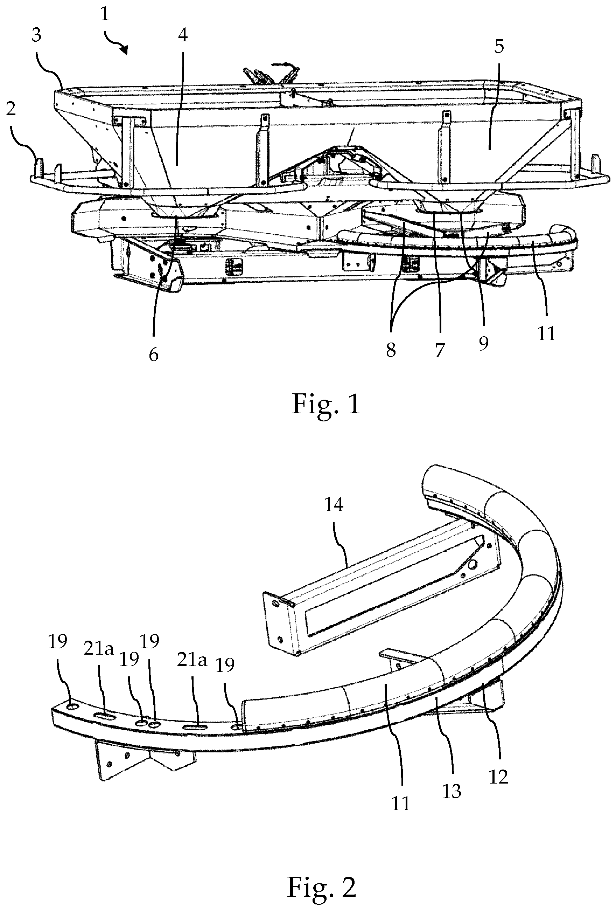

In der Fig. 1 ist eine Ausführungsform einer erfindungsgemäßen landwirtschaftlichen Verteilmaschine 1 in Form eines Zweischeiben-Düngerstreuers wiedergegeben, welcher einen von einem Rahmen 2 getragenen Vorratsbehälter 3 für das Verteilgut aufweist. Der Vorratsbehälter 3 umfasst zwei sich etwa trichterförmig nach unten verjüngende Behälterteile 4, 5, welche an ihrem unteren Ende mit jeweils einer Auslauföffnung 6, 7 versehen sind. Unterhalb einer jeden Auslauföffnung 6, 7 befindet sich je eine unabhängig voneinander steuer- und/oder regelbare Dosiereinrichtung, welche in der Fig. 1 aus Übersichtlichkeitsgründen nicht dargestellt ist und beispielsweise eine Dosieröffnung besitzen kann, deren Querschnitt mittels eines aktuatorisch angetriebenen Dosierschiebers veränderbar ist. Unterhalb eines Auslasses einer jeden Dosiereinrichtung sind mit Wurfschaufeln 8 versehene Verteilerscheiben 9 angeordnet, von welchen in der Fig. 1 nur die dort rechte gezeigt ist. Die Verteilerscheiben 9 sitzen drehfest auf einer etwa vertikalen Welle, welche steuer- und/oder regelbar gemäß der gewünschten Drehzahl drehangetrieben ist, sei es mittels bekannter hydraulischer oder elektrischer Antriebe oder sei es durch Anschluss des Antriebsstrangs der Welle(n) an die Zapfwelle einer Zugmaschine, wie eines Traktors.

Die Verteilmaschine 1 weist ferner eine Einrichtung zur Veränderung des Streuringsektors des von den Verteilerscheiben 9 abgeworfenen Verteilgutes 22 auf dem Boden auf, welche beispielsweise eine oder mehrere Komponenten aus der Gruppe
- Einrichtung zur Verstellung des Aufgabepunktes des Verteilgutes 22 auf die Verteilerscheiben 9 (z.B. in Form einer Verstelleinrichtung zum Verstellen des Auslasses der Dosiereinrichtungen radial und/oder insbesondere um den Umfang der Verteilerscheiben 9);
- Einrichtung zur Veränderung der Drehzahl der Verteilerscheibe (z.B. in Form eines drehzahlveränderlichen Antriebs der Wellen der Verteilerscheiben 9);
- Einrichtung zur Verstellung der Neigung der Verteilerscheibe 9; und/oder
- Einrichtung zur Verstellung der Wurfschaufeln 8 der Verteilerscheibe,
umfassen kann.

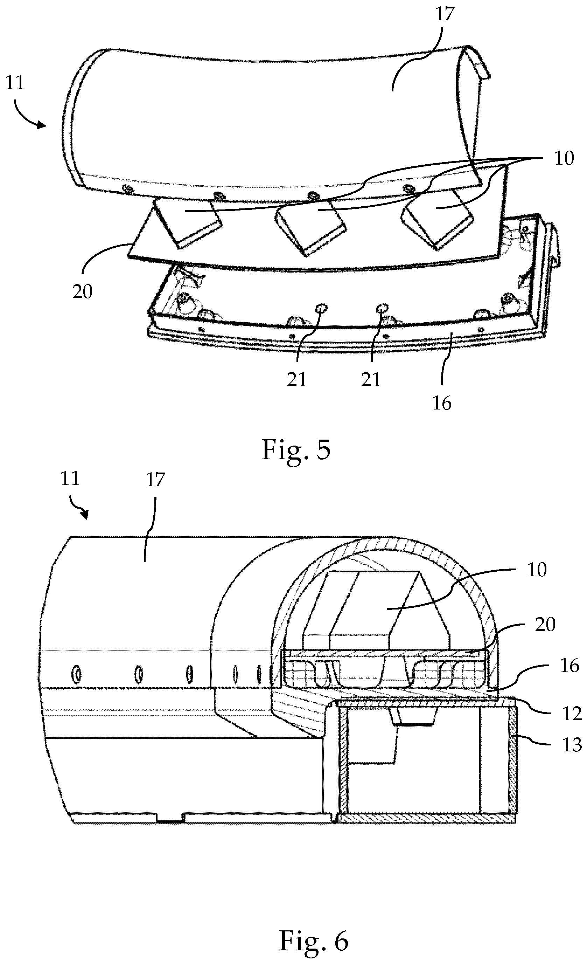

Den Verteilerscheiben 9 der Verteilmaschine 1 ist jeweils eine Anordnung von Sensoren 10 zugeordnet, die relativ zu der ihnen zugeordneten Verteilerscheibe 9, insbesondere zu deren radialem Mittelpunkt, in Umfangsrichtung - hier: etwa kreisbogensegmentförmig - verteilt und etwa unterhalb der Verteilerscheiben 9 angeordnet sind. In der Fig. 1 ist dies aus Übersichtlichkeitsgründen nur für die rechte Verteilerscheibe 9 dargestellt und sind die Sensoren 10, von welchen beispielsweise jeweils drei Sensoren 10 in einer gemeinsamen Sensoreinheit 11 zusammengefasst sind (vgl. insbesondere die Fig. 5), in der Fig. 1 nicht erkennbar. Wie sich auch aus den Fig. 2 bis 6 ergibt, welche den Aufbau der Sensoreinheiten 11 zeigen, sind im vorliegenden Fall neun Sensoreinheiten 11 mit jeweils drei Sensoren 10, als insgesamt 27 Sensoren, vorgesehen, welche jeweils unter demselben Winkelabstand zueinander angeordnet sind. Hierdurch ergibt sich für die einer jeweiligen Verteilerscheibe 9 zugeordneten Sensoren 10 ein Umfangsbereich von z.B. etwa 190°.

Die Sensoren 10 sind zur berührungsfreien sensorischen Erfassung eines oder mehrerer Abwurfparameter des von der Verteilerscheibe 6 abgeworfenen Verteilgutes jeweils in demjenigen Umfangsbereich der Verteilerscheibe 6 angeordnet, in welchem die Verteilgutpartikel von der Verteilerscheibe 6 abgeworfen werden. Die Sensoren 10 sind im Ausführungsbeispiel der Fig. 1 bis 6 als Radarsensoren ausgebildet und erfassen Messwerte 27 des von der Verteilmaschine 1 mittels der Verteilerscheibe 9 abgeworfenen Verteilgutes 22. Bei den Messwerten 27 handelt es sich dabei um von dem Verteilgut 22 reflektierte und/oder gestreute Radarsignale, die von den Sensoren 10 zugeordneten Signalquellen 29 in Richtung des abgeworfenen Verteilgutes 22 emittiert werden. Folglich lassen sich als für den Streuringsektor bzw. für die Querverteilung des Verteilgutes 22 auf dem Boden repräsentative Abwurfparameter beispielsweise der Massenstrom des von der Verteilerscheibe 9 abgeworfenen Verteilgutes 22, die Geschwindigkeit der abgeworfenen Verteilgutpartikel 22 sowie die Richtung derselben in einem jeweiligen Umfangsbereich der Verteilerscheibe 9, in welcher ein jeweiliger Sensor 10 angeordnet ist, mit hoher Präzision erfassen.

In der Detailansicht der Sensoreinheiten 11 gemäß Fig. 2 sind aus Übersichtsgründen sieben der neun Sensoreinheiten 11 gezeigt, wobei jede Sensoreinheit 11 in Kontakt mit den ihr benachbarten Sensoreinheiten 11 steht. Jede Sensoreinheit 11 weist beispielsweise jeweils drei Sensoren 10 auf, die derart in demselben Abstand zueinander angeordnet sind, dass sich auch zwischen den jeweils benachbarten, äußeren Sensoren 10 benachbarter bzw. aneinander angrenzender Sensoreinheiten 11 derselbe Abstand ergibt. Für alle Sensoren 10 sämtlicher Sensoreinheiten 11 ergibt sich folglich eine äquidistante Anordnung um einen Umfangsbereich um die Verteilerscheibe 9 herum, so dass die von einem jeden Sensor 10 erfassten Messwerte 27 für äquidistante Abschnitte des (gesamten) Streuringsektors repräsentativ sind, um hieraus insbesondere den Streuringsektor zu ermitteln. Wie bereits angedeutet, kann diesbezüglich bei der vorliegenden Ausführungsform exemplarisch vorgesehen sein, dass die insgesamt 27 Sensoren 10 unter einem Winkelabstand von etwa 7° um den Umfang der Verteilerscheibe 9 angeordnet sind, so dass sich ein Umfangsbereich um die Verteilerscheibe 9 von etwa 190° ergibt, innerhalb dessen die Messwerte 27 in einem engen Raster von jeweils 7°-Sektoren sensorisch erfasst werden können. Die mit jeweils drei Sensoren 10 bestückten, insgesamt neun Gehäusemodule 11 erstrecken sich dann beispielsweise jeweils um einen Winkelabschnitt von etwa 21° um den Umfang der Verteilerscheibe 9 herum.

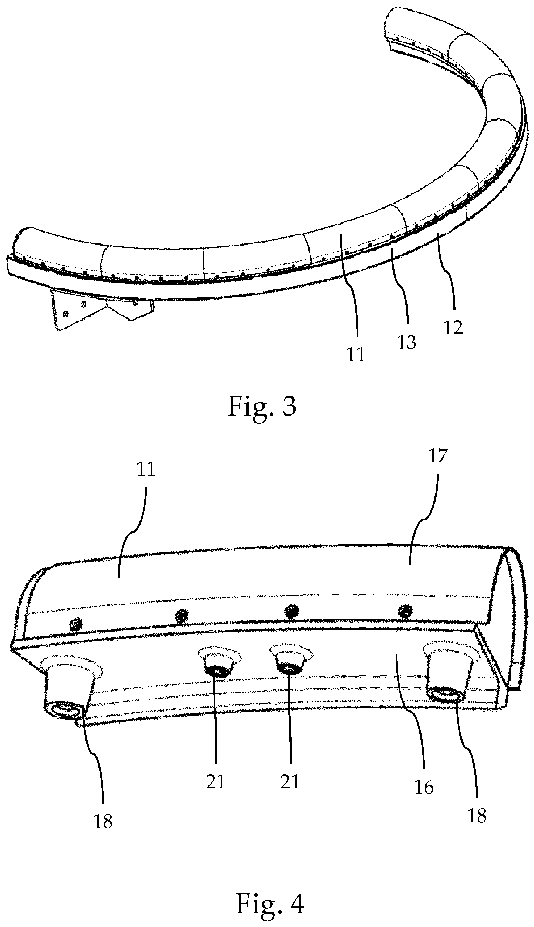

Wie insbesondere in den Fig. 2, 3 und 6 erkennbar, sind die Sensoreinheiten 11 z.B. in Erstreckungsrichtung eines Trägers 12 der Verteilmaschine 1 unmittelbar aneinander angrenzend und lösbar an dem Träger 12 befestigt, wobei der Träger 12 ein sich über einen Umfangsabschnitt, z.B. von etwa 190°, um den Umfang der Verteilerscheibe 9 herum erstreckendes Profilteil 13 aufweist, welches im vorliegenden Fall ein Rechteck-Hohlprofil besitzt. Das Profilteil 13 des Trägers 12 ist hierbei z.B. mittels eines lediglich in Fig. 2 zeichnerisch wiedergegebenen Tragarms 14 sowie gegebenenfalls weiterer Befestigungsmittel an der Verteilmaschine 1 befestigt, wobei der Tragarm 14 (sowie gegebenenfalls die weiteren Befestigungsmittel) in Bezug auf das Profilteil 13 des Trägers 12 höhenverstellbar ist, um das optimale Höhenniveau der Sensoren 10 an verschiedene Verteilerscheiben 9 und/oder an verschiedene Wurfschaufeln 8 anpassen zu können. Die Sensoren 10 sind unterhalb der von der Verteilerscheibe 9 abgeworfenen Verteilgutpartikel 22 angeordnet, so dass den Sensoren 10 zugeordnete Signalquellen 29 ihre Messstrahlung etwa senkrecht oder vorzugsweise schräg nach oben und außen (d.h. mit radialer Richtungskomponente von der Verteilerscheibe 9 fort) emittieren, um Störsignale aufgrund von am Boden befindlicher Gegenstände, wie sich bewegender Pflanzen etc., zu vermeiden. Das Hohlprofil des Profilteils 13 des Trägers 12 kann ferner insbesondere zur Aufnahme von elektrischer bzw. elektronischer Verbindungsmittel, wie Kabel und dergleichen, dienen, um diese vor äußeren Einwirkungen geschützt durch das Profilteil 13 hindurch den jeweiligen Sensoreinheiten 11 zuzuführen. Wie in Fig. 2 erkennbar, bei welcher die beiden linken Sensoreinheiten 11 demontiert worden sind, besitzt das Profilteil 13 des Trägers 12 zu diesem Zweck an seiner den Sensoreinheiten 11 zugewandten - hier oberen - Seite einer jeweiligen Sensoreinheit 11 zugeordnete Durchgangsbohrungen 15 zur Kabeldurchführung in eine jeweilige Sensoreinheit 11 hinein bzw. aus dieser heraus. Fig. 3 zeigt den Träger 12 mit sämtlichen hierfür vorgesehenen neun Sensoreinheiten 11.

Die Fig. 4 zeigt eine Sensoreinheit 11 gemäß Fig. 3 in einer Detailansicht von schräg unten. Demnach ist die Sensoreinheit 11 zweiteilig ausgestaltet und umfasst jeweils ein an dem Profilteil 13 des Trägers 12 lösbar befestigtes Basisteil 16 sowie ein an letzterem lösbar festgelegtes Deckelteil 17 (siehe insbesondere Fig. 4 bis 6). Zumindest das Deckelteil 17 ist für die von den Sensoren 10 empfangenen Messwerte 27 - hier: Radarstrahlung - durchlässig, wobei es ebenso wie das Basisteil 16 beispielsweise aus einem hierfür geeigneten Kunststoff gefertigt sein kann. Das Basisteil 16 weist an seiner Unterseite zwei Zentrierzapfen 18 auf, die entsprechend hierzu geformte Durchbrüche 19 des Profilteils 13 gemäß Fig. 1 durchgreifen können, um die Sensoreinheit 11 mit dem Profilteil 13 lösbar zu verbinden. Die lösbare Verbindung ermöglicht einen besonders einfachen und schnellen Austausch einer defekten Sensoreinrichtung 11 und auch eine Reinigung einer verschmutzten Sensoreinrichtung 11.

In der Fig. 5 ist die Sensoreinheit 11 der Fig. 4 in einer Explosionsdarstellung wiedergegeben. Zwischen dem Basisteil 16 und dem Deckelteil 17 ist eine Platine 20 mit drei Sensoren 10 angeordnet. Die Sensoren 10 sind jeweils einzeln lösbar, insbesondere steckbar, mit der Platine 20 verbunden. Zur Kontaktierung der Sensoren 10 mit nicht zeichnerisch dargestellten Kabeln weisen die Sensoreinheiten 11 in einem - in Längsrichtung betrachtet - mittleren Bereich zwei Durchgangsbohrungen 21 auf, die entsprechend den Sensoreinheiten 11 zugeordneten Durchgangsbohrungen 21a des Trägers 12 angeordnet und ausgestaltet sind, wie dies in Fig. 2 dargestellt ist. Die dem Träger 12 abgewandte Seite der Sensoreinheiten 11, hier die Oberfläche des Deckelteils 17, weist einen im Wesentlichen halbkreisförmigen Querschnitt auf, so dass sie von der von den Sensoren 10 emittierten bzw. empfangenen Messwerten 27 im Wesentlichen senkrecht durchsetzt wird, um für einen minimalen Signalverlust zu sorgen.

Der Fig. 6 ist ein schematischer Schnitt durch eine auf dem Träger 12 angeordnete Sensoreinheit 11 zu entnehmen, der nochmals die Anordnung der Sensoren 10 auf der Platine 20 sowie die Anordnung der Platine zwischen dem Basisteil 16 und dem Deckelteil 17 zeigt.

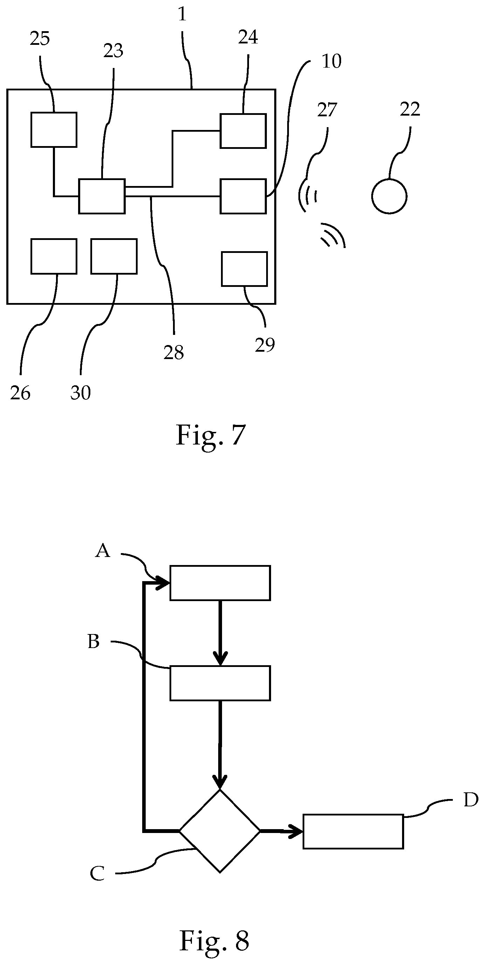

Die Fig. 7 zeigt die landwirtschaftliche Verteilmaschine 1 in einer schematischen Funktionsansicht, wonach die Verteilmaschine 1 eine Signalquelle 29 aufweist, die im vorliegenden Ausführungsbeispiel z.B. als Radar- oder Infrarotsignalquelle dazu ausgebildet ist, Radar- oder Infrarotsignale in Richtung des von den Verteilerscheiben 9 abgeworfenen Verteilguts 22 zu senden. Die von dem Verteilgut 22 reflektierten und/oder gestreuten Signale werden als Messwerte 27 von den Sensoren 10 der Verteilmaschine 1 erfasst. Aus Übersichtsgründen ist in der Fig. 7 nur ein einziger Sensor 10 zeichnerisch wiedergegeben. Die Sensoren 10, bei denen es sich - wie oben erwähnt - z.B. um Radar- oder Infrarotsensoren handeln kann, wandeln die von ihnen empfangenen Messwerte 27 in Sensorsignale 28 um und übertragen die Sensorsignale 28 an eine Datenverarbeitungseinrichtung 23 der Verteilmaschine 1. Die Verteilmaschine 1 weist ferner einen Feuchtigkeitssensor 24 auf, der die aktuelle Luftfeuchtigkeit erfasst und diesen Wert an die Datenverarbeitungseinrichtung 23 übermittelt. Benutzereingaben können über eine Bedieneinrichtung 25 erfasst und an die Datenverarbeitungseinrichtung 23 geleitet werden. Eine Reinigungsvorrichtung 26 ist dazu ausgebildet, im Rahmen des erfindungsgemäßen Verfahrens die Sensoren 10 zu reinigen. Über eine Anzeigeeinrichtung 30 kann der Güteparameter oder das Ergebnis einer sich nach dem Erhalt des Güteparameters anschließenden Auswertung desselben dem Benutzer der Verteilmaschine 1 ausgegeben werden. Beispielsweise kann die Ausgabeeinrichtung 30 der Verteilmaschine 1 eine Anzeigeeinrichtung sein, wie insbesondere ein Bildschirm. Die Datenverarbeitungseinrichtung 23 ist dazu ausgebildet, das erfindungsgemäße Verfahren durchzuführen, dessen konkrete Ausgestaltung im Folgenden beschrieben ist.

Die Fig. 8 zeigt schematisch den Ablauf einer Ausführungsform des erfindungsgemäßen Verfahrens in einem Flussdiagramm. In Verfahrensschritt A erfolgt die Erfassung der Messwerte 27 des von der Verteilerscheibe 9 der Verteilmaschine 1 abgeworfenen Verteilgutes 22 durch die Sensoren 10 und die Weiterleitung der Messwerte 27 als Sensorsignale 28 an die Datenverarbeitungseinrichtung 23. Parallel hierzu wird über den Feuchtigkeitssensor 24 der Verteilmaschine 1 die aktuelle Luftfeuchtigkeit gemessen, die ebenfalls an die Datenverarbeitungseinrichtung 23 übermittelt wird. In dem darauffolgenden Verfahrensschritt B wird ein trainiertes Modell, das zumindest eine KI-basierte Komponente aufweisen kann, auf die Sensorsignale 28 angewendet mit dem Ergebnis, dass ein Güteparameter erhalten wird, welcher der Sensorqualität der Sensoren 10 entspricht. Im gezeigten Ausführungsbeispiel entspricht der Güteparameter dem Grad der Verschmutzung der Sensoren 10 und wird als prozentualer Wert auf der Ausgabeeinrichtung 30 ausgegeben.

In Verfahrensschritt C erfolgt eine Abfrage dahingehend, ob der erhaltene Güteparameter innerhalb eines vordefinierten Intervalls um einen vorgegebenen Grenzwert für die ideale Sensorqualität liegt. Ist dies der Fall, liegt keine nennenswerte Verschmutzung der Sensoren 10 vor und das Verfahren wird nach einer zeitlichen Verzögerung mit dem Verfahrensschritt A wiederholt. Wird die Abfrage C dagegen verneint, liegt eine nennenswerte Verschmutzung der Sensoren 10 vor. In einem nächsten Verfahrensschritt D erfolgt daraufhin die Ausgabe eines optischen und/oder akustischen Signals auf der Ausgabeeinrichtung 30 der Verteilmaschine 1, um den Benutzer auf die Verschmutzung der Sensoren 10 hinzuweisen. Zusätzlich kann eine Reinigungsvorrichtung 26 der Verteilmaschine 1 angesteuert werden, um eine Reinigung der Sensoren 10 zu veranlassen. Die Reinigungsvorrichtung 26 ist zweckmäßigerweise auch benutzerseitig durch eine entsprechende Eingabe mittels der Bedieneinrichtung 25 aktivierbar.

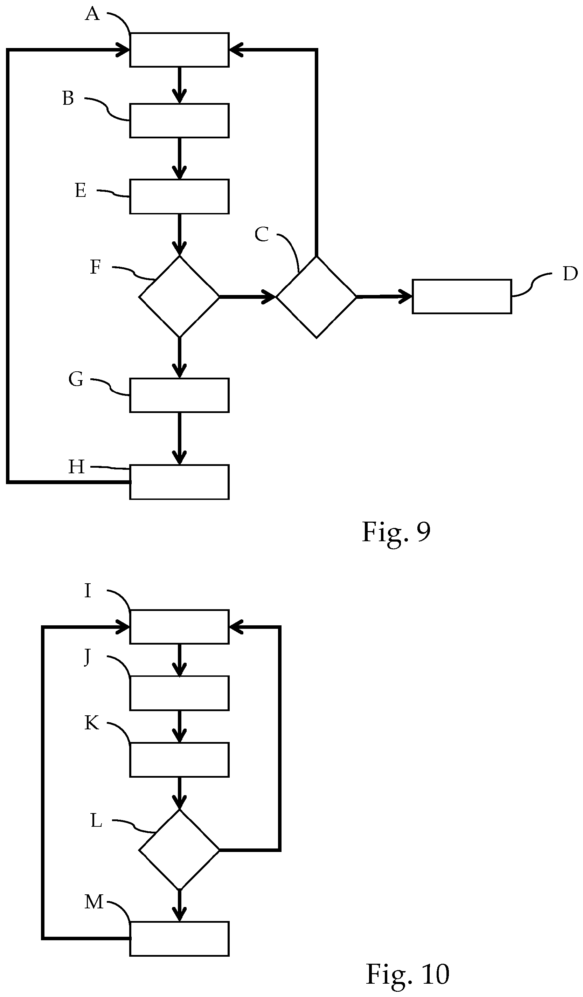

In der Fig. 9 ist in einem schematischen Ablaufdiagramm eine weitere Ausgestaltung des erfindungsgemäßen Verfahrens dargestellt. Dessen Verfahrensschritte A und B entsprechen im Wesentlichen den Verfahrensschritten A und B gemäß dem Verfahren der Fig. 8. Nach dem Verfahrensschritt B erfolgt jedoch nicht die Abfrage C des Verfahrens gemäß Fig. 8, sondern im Verfahrensschritt E die Bestimmung eines Fehlerparameters, welcher der Erkennungsgenauigkeit des erhaltenen Güteparameters entspricht. Im Anschluss daran erfolgt eine Abfrage F, ob der Fehlerparameter um weniger als ein vordefiniertes Fehlerintervall von dem Grenzwert abweicht, wobei Das Fehlerintervall größer ist als das Intervall des Verfahrens gemäß Fig. 8. Ist die Abfrage F positiv, wird das Verfahren mit den Verfahrensschritten C und D gemäß dem Verfahren nach Fig. 8 fortgesetzt, wie dies bereits im Zusammenhang mit der Fig. 8 beschrieben ist. Ist die Abfrage E dagegen negativ, schaltet das Verfahren in einen Lernmodus um. Dabei wird in einem Verfahrensschritt G ein Güteparameter im Sinne eines Soll-Wertes für den Sensor bzw. die Sensoren 10 eingelesen, was beispielsweise über eine manuelle Eingabe erfolgen kann. Dieser eingelesene Güteparameter entspricht einem annähernd idealen Wert für den Güteparameter. In einem nächsten Verfahrensschritt H wird das trainierte Modell mit einem Differenzparameter rückwärts gespeist, der basierend auf dem erhaltenen Güteparameter und dem eingelesen Güteparameter bestimmt wird. Dadurch werden Parameter des trainierten Modells geändert und wird das trainierte Modell optimiert. Danach wird das Verfahren beginnend mit dem Verfahrensschritt A wiederholt. Der Lernmodus kann auch manuell durch eine Benutzereingabe mittels der Bedieneinrichtung 25 begonnen und/oder beendet werden. Dadurch kann das trainierte Modell bei einer Änderung der Bedingungen für den Einsatz der Verteilmaschine 1 auf diese geänderten Bedingungen hin optimiert werden, so dass Fehlfunktionen vermieden werden, wenn ein ursprünglich auf andere Bedingungen optimiertes trainiertes Modell unter geänderten Bedingungen eingesetzt wird.

Die Fig. 10 zeigt in einem schematischen Ablaufdiagramm einen Trainingsmodus eines erfindungsgemäßen Verfahrens, der beispielsweise durch eine manuelle Eingabe ausgelöst und auch wieder beendet werden kann. In einem ersten Verfahrensschritt I werden Soll-Trainingsdaten bereitgestellt. Die Soll-Trainingsdaten umfassen bereits vorhandene Sensorsignale 28 der Sensoren 10 und mit den Sensorsignalen 28 korrespondierende, vordefinierte Güteparameter der Sensoren 10, die deren idealen Werten entsprechen. Im Verfahrensschritt J wird das trainierte Modell mit den Soll-Trainingsdaten vorwärts gespeist, wobei ein Güteparameter erhalten wird. Daraufhin wird in einem nächsten Verfahrensschritt K auf dieser Grundlage ein Fehlerparameter bestimmt, welcher der Abweichung zwischen dem ermittelten Güteparameter und dem vordefinierten Güteparameter entspricht. Im nächsten Verfahrensschritt L erfolgt eine Abfrage, ob ein dem Fehlerparameter zugeordneter Qualitätsparameter um mehr als ein vordefiniertes Trainingsintervall von einem vordefinierten Wert abweicht. Ist dies der Fall, wird der Trainingsmodus mit dem Verfahrensschritt I wiederholt, wobei neue Soll-Trainingsdaten eingelesen werden. Eine Veränderung der Parameter des trainierten Modells erfolgt dabei nicht, da die Qualität des im Trainingsmodus erhaltenen Güteparameters für ungenügend befunden wurde. Ist die Abfrage L dagegen positiv, wird das trainierte Modell im nächsten Verfahrensschritt M mit dem Fehlerparameter rückwärts gespeist, wobei die Parameter des Modells hinsichtlich der Soll-Trainingsdaten optimiert werden. Danach kann der Trainingsmodus mit weiteren Trainingsdaten wiederholt werden, bis der gewünschte Trainingsgrad erreicht ist. Durch die Abfrage L wird gewährleistet, dass nur dann die Parameter des trainierten Modells geändert werden, wenn der Qualitätsparameter innerhalb des vordefinierten Trainingsintervalls um den vordefinierten Wert liegt.

Der Trainingsmodus kann unmittelbar nach der Herstellung der Verteilmaschine 1 herstellerseitig durchgeführt werden. Alternativ oder zusätzlich kann der Trainingsmodus vor der ersten Inbetriebnahme der Verteilmaschine 1 bei dem Benutzer an dem gewünschten Einsatzort der Verteilmaschine 1 durchgeführt werden, um das trainierte Modell hinsichtlich der lokal bei dem Benutzer vorherrschenden Bedingungen zu optimieren. Dies kann z.B. über eine Benutzereingabe mittels der Bedieneinrichtung 26 erfolgen.

## Patentansprüche

1. Verfahren zum Bestimmen der Sensorqualität von mindestens einem Sensor (10) einer landwirtschaftlichen Verteilmaschine (1), wobei der Sensor (10) derart angeordnet und ausgestaltet ist, Messwerte (27) eines von der Verteilmaschine (1) mittels mindestens einer Verteilerscheibe (9) abgeworfenen Verteilgutes (22) zu erfassen und die Messwerte (27) als Sensorsignale (28) an eine dem Sensor (10) zugeordnete Datenverarbeitungseinrichtung (23) zu übertragen, wobei die Datenverarbeitungseinrichtung (23) ein trainiertes Modell auf die Sensorsignale (28) anwendet unter Erhalt eines Güteparameters, welcher der Sensorqualität des Sensors (10) entspricht.

2. Verfahren nach Anspruch 1, **dadurch gekennzeichnet, dass** die Messwerte (27) elektromagnetische Signale sind, die von einer dem Sensor (10) zugeordneten elektromagnetischen Signalquelle (29) erzeugt werden und insbesondere auf das abgeworfene Verteilgut (22) ausgerichtet sind.

3. Verfahren nach einem der Ansprüche 1 oder 2, **dadurch gekennzeichnet, dass** die Datenverarbeitungseinrichtung (23) das trainierte Modell auf Sensorsignale (28) von mindestens zwei Sensoren (10) und/oder auf eine innerhalb eines, insbesondere vordefinierten, Zeitintervalls erfasste Gruppe von Sensorsignalen (28) anwendet.

4. Verfahren nach einem der Ansprüche 1 bis 3, **dadurch gekennzeichnet, dass** das trainierte Modell nach einer, insbesondere veränderlichen, Gewichtung der Sensorsignale (28) auf die Sensorsignale (28) angewendet wird, wobei die Gewichtung insbesondere in Abhängigkeit eines Zeitintervalls und/oder in Abhängigkeit von dem den Sensorsignalen (28) zugeordneten Sensoren (10) erfolgt.

5. Verfahren einem der Ansprüche 1 bis 4, **dadurch gekennzeichnet, dass** das trainierte Modell für den Erhalt des Güteparameters auf mindestens ein Mitglied der folgenden Parameter angewendet wird: Luftfeuchtigkeit, Windrichtung, Windstärke, Position der Verteilmaschine, Fahrgeschwindigkeit der Verteilmaschine, Neigung und/oder Beschleunigung der Verteilmaschine, Verteilgutparameter einschließlich Verteilguttyp, Dosiermenge, Drehzahl der Verteilerscheibe, Arbeitsbreite, Aufgabepunkt auf die Verteilerscheibe, Wurfweite, Verteilerscheibentyp.

6. Verfahren nach einem der Ansprüche 1 bis 5, **dadurch gekennzeichnet, dass** der Güteparameter
- der Verschmutzung des Sensors (10), insbesondere dessen Verschmutzungsgrad, und/oder dem technischen Zustand des Sensors (10) entspricht; und/oder
- eine Metrik repräsentiert, die dem Abstand der aktuellen Sensorqualität von einem, insbesondere vordefinierten, Grenzwert einer idealen Sensorqualität entspricht; und/oder
- einer vordefinierten Anzahl von Kategorien zugeordnet wird, wobei die Kategorie des Güteparameters insbesondere auf einer Ausgabeeinrichtung (30) ausgegeben wird, vorzugsweise auf einer Anzeigeeinrichtung angezeigt wird.

7. Verfahren nach einem der Ansprüche 1 bis 6, **dadurch gekennzeichnet, dass**
- ein Signal ausgegeben wird, wenn der Güteparameter um ein vordefiniertes Warnintervall von einem vordefinierten Warnwert abweicht, und/oder
- eine Reinigungsvorrichtung (26) der Verteilmaschine (1) angesteuert wird, sobald der Güteparameter um ein vordefiniertes Reinigungsintervall von einem vordefinierten Reinigungswert abweicht.

8. Verfahren nach einem der Ansprüche 1 bis 7, **dadurch gekennzeichnet, dass** nach dem Erhalt des Güteparameters ein Fehlerparameter bestimmt wird, welcher der Erkennungsgenauigkeit des erhaltenen Güteparameters entspricht, wobei insbesondere nach der Bestimmung des Fehlerparameters der Fehlerparameter mit einem vordefinierten Grenzwert verglichen wird und für den Fall, dass der Fehlerparameter um weniger als ein, insbesondere vordefiniertes, Fehlerintervall von dem Grenzwert abweicht, das Verfahren fortgesetzt wird, wohingegen für den Fall, dass der Fehlerparameter um mehr als das Fehlerintervall von dem Grenzwert abweicht, das Verfahren in einen Lernmodus umgeschaltet wird, der die folgenden Schritte umfasst:
- Einlesen des Güteparameters des Sensors,
- Ändern von Parametern des trainierten Modells durch Rückwärtsspeisen des trainierten Modells mit einem Differenzparameter, der basierend auf dem erhaltenen Güteparameter und dem eingelesenen Güteparameter bestimmt wird, und
- Wiederholen des Verfahrens.

9. Verfahren nach einem der Ansprüche 1 bis 8, **dadurch gekennzeichnet, dass** das trainierte Modell in einem Trainingsmodus mit Soll-Trainingsdaten trainierbar ist, wobei die Soll-Trainingsdaten Sensorsignale (28) des Sensors (10) und mit den Sensorsignalen (28) korrespondierende, vordefinierte Güteparameter des Sensors (10) umfassen, mit den folgenden Trainingsschritten:
- Vorwärtsspeisen des trainierten Modells mit den Soll-Trainingsdaten unter Erhalt eines Güteparameters,
- Bestimmen eines Fehlerparameters, welcher der Abweichung zwischen dem ermittelten Güteparameter und dem vordefinierten Güteparameter entspricht, und
- Ändern von Parametern des trainierten Modells durch Rückwärtsspeisen des Modells mit dem Fehlerparameter, falls ein dem Fehlerparameter zugeordneter Qualitätsparameter um mehr als ein vordefiniertes Trainingsintervall von einem vordefinierten Wert abweicht.

10. Landwirtschaftliche Verteilmaschine (1) mit mindestens einer Verteilerscheibe (9) zum Abwerfen von Verteilgut (22) und mit mindestens einem der Verteilerscheibe (9) zugeordneten Sensor (10), wobei die Verteilmaschine (1) zur Durchführung eines Verfahrens nach einem der Ansprüche 1 bis 11 ausgebildet ist.

11. Verteilmaschine (1) nach Anspruch 10, **dadurch gekennzeichnet, dass** der Sensor (10) unterhalb der Verteilerscheibe (9) der Verteilmaschine (1) und/oder in Abhängigkeit von der Höhe der Verteilerscheibe (9) höhenverstellbar angeordnet ist.

12. Verteilmaschine (1) nach Anspruch 10 oder 11, **dadurch gekennzeichnet, dass** die Verteilmaschine (1) mindestens 12, insbesondere mindestens 18, vorzugsweise mindestens 24, Sensoren (10) umfasst, die insbesondere in Umfangsrichtung relativ zu dem radialen Mittelpunkt der Verteilerscheibe (9) verteilt angeordnet sind, wobei insbesondere mehrere Sensoren (10) zu einer Sensoreinheit (11) zusammengefasst sind.

13. Verteilmaschine (1) nach einem der Ansprüche 10 bis 12, **dadurch gekennzeichnet, dass** der Sensor (10) zur Detektion von Messwerten (27) in Form von elektromagnetischer Strahlung ausgebildet ist.

14. Verteilmaschine (1) nach einem der Ansprüche 10 bis 13, **dadurch gekennzeichnet, dass** die Verteilmaschine (1) eine Bedieneinrichtung (25) zur Entgegennahme von mindestens einer Benutzereingabe zur Steuerung des Verfahrens aufweist, wobei die Bedieneinrichtung (25) zur Kommunikation mit der Datenverarbeitungseinrichtung (23) über eine Schnittstelle der Verteilmaschine (1) ausgebildet ist.

15. Computerprogramm mit Programmcodemitteln, das dazu eingerichtet ist, die Schritte eines Verfahrens nach einem der Ansprüche 1 bis 9 durchzuführen, wenn das Computerprogramm auf einem Computer oder einer entsprechenden Recheneinheit ausgeführt wird, insbesondere auf einer Datenverarbeitungseinrichtung (23) einer landwirtschaftlichen Verteilmaschine (1) nach einem der Ansprüche 10 bis 14.
